# EUROPEAN PATENT APPLICATION

(11) **EP 4 632 444 A1**
(43) Date of publication of application: **15.10.2025**
(21) Application number: 23900743.8
(22) Date of filing: 08.12.2023
(51) Int. Cl.: G02B 5/02, B32B 7/022, B32B 7/023, B32B 27/36, F21S 2/00, F21Y 115/10

(54) **OPTICAL SHEET, BACKLIGHT UNIT, IMAGE DISPLAY DEVICE, LIGHTING DEVICE, AND METHOD FOR MANUFACTURING OPTICAL SHEET**

(30) Priority: 09.12.2022 JP 2022197242; 04.12.2023 JP 2023204571
(71) Applicant: KEIWA Incorporated, Tokyo 103-0025 (JP)
(72) Inventor: TANI Satoru, Tokyo 103-0025 (JP); NONAKA Tadayuki, Tokyo 103-0025 (JP); NAZIKIAN Tomoki, Tokyo 103-0025 (JP)
(74) Representative: Becker Kurig & Partner Patentanwälte mbB
(86) International application number: PCT/JP2023/043991
(87) International publication number: WO 2024/122631

(57) **Abstract**

The present invention addresses the problem of providing an optical sheet having high light transmission property and light diffusion property, and having high handleability. An optical sheet according to one aspect of the present invention is provided with a base material layer having polyester as a main component, and has first protruding portions on at least one surface of the base material layer, and a value obtained by multiplying the aspect ratio of the first protruding portion by 1000 is less than 15. In a preferred aspect, the ratio SRz/SRa of ten point average roughness SRz to average roughness SRa of the one surface is 17-45.

## Description

### Technical Field

The present invention relates to an optical sheet, a backlight unit, an image display device, a lighting device, and a method for manufacturing an optical sheet.

### Background Art

Image display devices such as liquid crystal display devices include a display panel and a backlight unit disposed on the back side of the display panel. There are various types of backlight units such as an edge type (side light type) and a direct type. These backlight units include a light source and an optical sheet that provides an optical function for light emitted from the light source. When such an optical sheet is provided, the backlight unit can be made brighter and have a uniform brightness.

As the optical sheet, for example, one having a base layer and a functional layer such as a light diffusion layer laminated on the base layer is known. As the base layer, a polyester film that is highly adhesive and thus improves handling properties is known (Japanese Patent Application Publication No. 2014-043571).

### Citation List

### Patent Literature

Patent Literature 1: Japanese Patent Application Publication No. 2014-043571

### Summary of Invention

### Technical Problem

The polyester film disclosed in Patent Literature 1 is formed by biaxial stretching, and is highly adhesive due to adjustment of thermal shrinkage in the longitudinal direction and the surface crystallinity of a plasma-treated adhesive surface. However, the polyester film described in Patent Literature 1 is more highly adhesive to other layers, but handling properties of the film itself during manufacturing have not been studied.

In view of the above circumstances, an object of the present invention is to provide an optical sheet having improved handling properties.

### Solution to Problem

An optical sheet according to one aspect of the present invention, which has been made to achieve the above object, has a base layer containing a polyester as a main component, wherein the base layer has a first convex part on at least one surface, and a value obtained by multiplying an aspect ratio of the first convex part by 1,000 is less than 15.

### Advantageous Effects of Invention

The optical sheet according to one aspect of the present invention has excellent handling properties.

### Brief Description of Drawings

[FIG. 1] FIG. 1 is a schematic side view showing an internal structure of an image display device according to one embodiment of the present invention.
[FIG. 2] FIG. 2 is a schematic cross-sectional view showing a partially enlarged surface of a base layer of a light diffusion sheet provided in a backlight unit of the image display device in FIG. 1.
[FIG. 3] FIG. 3 shows schematic side views of the structure of a light diffusion sheet including a layered conductive part, in which, (a) of FIG. 3 is a view showing the configuration of a light diffusion sheet containing an antistatic agent in a light diffusion layer, and (b) of FIG. 3 is a view showing the configuration of a light diffusion sheet containing an antistatic agent in an adhesive layer.

### Description of Embodiments

### Description of Embodiments of the Present Invention

First, embodiments of the present invention will be listed and described.

An optical sheet according to one aspect of the present invention has a base layer containing polyester as a main component, wherein the base layer has a first convex part on at least one surface, and a value obtained by multiplying an aspect ratio of the first convex part by 1,000 is less than 15.

Accordingly, it is possible to improve handling properties.

The ratio SRz/SRa of the ten-point average roughness SRz to the average roughness SRa on the one surface may be 17 or more and 45 or less. In such a configuration, it is possible to further improve handling properties.

The first convex part may be formed by a highly crystalline part of the polyester. In such a configuration, it is easy to control such that the ratio SRz/SRa is within the above range.

The base layer may contain a plurality of particles, and may have a plurality of second convex parts caused by the plurality of particles on the one surface. That is, the other part of the uneven shape constituting the average roughness SRa and the ten-point average roughness SRz may be formed due to the particles. In such a configuration, it is easy to control such that the ratio SRz/SRa is within the above range.

The value obtained by multiplying an aspect ratio of the second convex part by 1,000 may be 15 or more. Accordingly, it is possible to more easily set the ratio SRz/SRa within the above range.

The average roughness SRa may be 2.5 nm or more and 15 nm or less, and the ten-point average roughness SRz may be 107 nm or more and 410 nm or less. Accordingly, it is possible to further improve handling properties of the optical sheet.

In the transmission color tone of the optical sheet, the a value may be -1.0 or more, and the b value may be 5.0 or less. Accordingly, it is possible to improve the transparency while improving handling properties of the optical sheet.

The optical sheet may include a layered conductive part having a thickness of 0.001 µm or more and 1 µm or less formed parallel to the surface of the sheet. Accordingly, it is possible to effectively curb the optical sheet being charged and also to effectively prevent contamination inside the backlight. The conductive part may contain, for example, various antistatic agents of an electron conductive type, an ion conductive type, and a conjugated electron type. Here, in order to effectively curb the optical sheet being electrically charged, the thickness of the layered conductive part is preferably 0.005 µm or more and 0.8 µm or less and more preferably 0.01 µm or more and 0.6 µm or less.

The surface electrical resistivity measured on at least one of a front surface and a back surface is preferably 1×10² Ω/sq or more and 10×10¹⁵ Ω/sq or less. Accordingly, it is possible to effectively curb the optical sheet being charged and also to effectively prevent contamination inside the backlight.

The surface electrical resistivity measured on at least one of a front surface and a back surface is more preferably 1×10² Ω/sq or more and 10×10¹³ Ω/sq or less. Accordingly, it is more effectively curb the optical sheet being electrically charged and also to more effectively prevent contamination inside the backlight. Here, a smaller lower limit value of the surface electrical resistivity is more preferable, and in order to prevent contamination inside the backlight, the lower limit value of the surface electrical resistivity may be 1×10⁶ Ω/sq or 1×10¹⁰ Ω/sq.

The polyester may be polyethylene terephthalate. Accordingly, an optical sheet having excellent molding properties, thermomechanical properties, and optical properties can be obtained, and it is possible to easily set the ratio SRz/SRa of the optical sheet within the above range. In addition, when the polyester is polyethylene naphthalate or polybutylene terephthalate, an optical sheet having excellent molding properties, thermomechanical properties, and optical properties is obtained.

The optical sheet may further have a light diffusion layer laminated on the base layer. When the ratio SRz/SRa on the one surface is within the above range, the optical sheet is suitable as a base layer for a light diffusion sheet.

A backlight unit according to another aspect of the present invention includes the optical sheet.

The backlight unit includes the optical sheet having a base layer having improved handling properties and thus is easy to manufacture.

An image display device according to still another aspect of the present invention includes the backlight unit.

The image display device includes the backlight unit and thus is easy to manufacture.

A lighting device according to yet another aspect of the present invention includes the backlight unit.

The lighting device includes the backlight unit and thus is easy to manufacture.

A method for manufacturing an optical sheet according to yet another aspect of the present invention includes step of crushing a molded product containing polyester as a main component, a step of forming pellets by extrusion molding using crushed pieces obtained in the crushing step, and a step of forming a base layer using the pellets.

The method for manufacturing an optical sheet may further include a step of recovering the molded product containing polyester as a main component.

In the method for manufacturing an optical sheet, the molded product containing polyester as a main component is recovered, the recovered molded product is broken into pellets to manufacture an optical sheet, and thus it is possible to easily manufacture an optical sheet having excellent handling properties using recycled resources.

Here, the term "main component" refers to the most abundant component based on mass, for example, a component contained in an amount of 50 mass% or more. The term "average roughness SRa" refers to a value measured using a contact type surface roughness measuring instrument according to JIS-B0601 (2013). The term "ten-point average roughness SRz" refers to a value measured using a contact type surface roughness measuring instrument according to JIS-B0601 (2013). The aspect ratio is a ratio of the height of the convex part to the length (the length of the base layer in the thickness direction and the vertical direction) of the bottom of the convex part in an image including the surface of the base layer obtained by a contact type surface roughness measuring instrument. The transmission color tone includes an a value and a b value of the color tone defined in JIS-Z8722 (2009) and JIS-Z8730 (2009).

### Details of Embodiments of the Present Invention

Hereinafter, the present invention will be described in detail with reference to the drawings. Here, the drawings are schematic diagrams for explaining the present invention, and shapes and scale ratios of components (members) may differ from actual components.

### <Image Display Device>

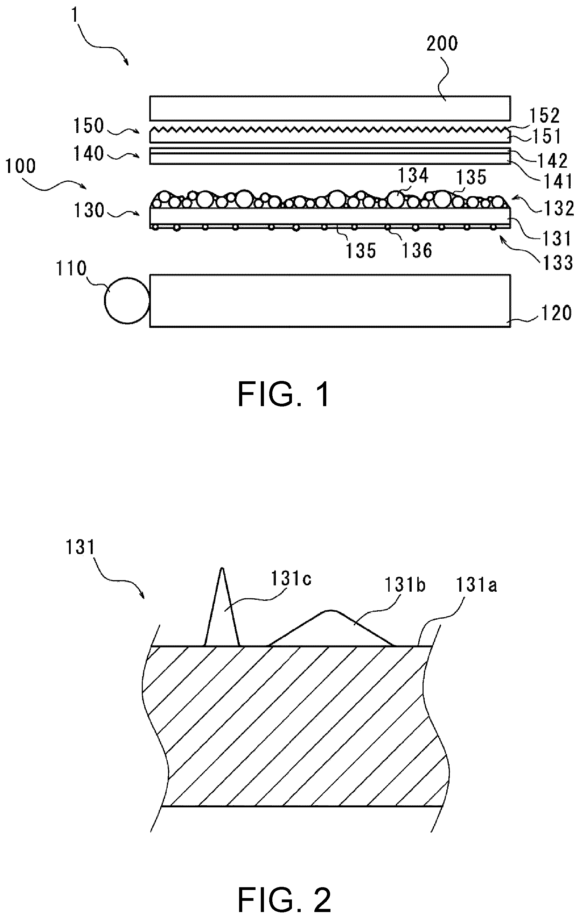

As shown in FIG. 1, an image display device 1 includes a backlight unit 100 and a display panel 200 disposed on the front side (viewer side) of the backlight unit 100. In addition, the image display device 1 includes a casing (not shown) in which the backlight unit 100 is accommodated.

In the present embodiment, the image display device 1 is a liquid crystal display device. That is, the display panel 200 is a liquid crystal panel. The image display device 1 may be a portable display device such as a smartphone or a tablet terminal, or may be a relatively large display device such as a television or a personal computer.

### [Backlight Unit]

The backlight unit 100 according to the present embodiment is an edge type backlight unit. The backlight unit 100 mainly includes a light source 110, a light guide sheet 120 that takes in light emitted from the light source 110 from the side and emits it from the front surface, a light diffusion sheet 130 disposed on (the front side of) the light guide sheet 120, and prism sheets (a first prism sheet 140 and a second prism sheet 150) disposed on the light diffusion sheet 130. The light guide sheet 120, the light diffusion sheet 130, and the prism sheets 140 and 150 are all optical sheets. In the present embodiment, the light diffusion sheet 130 to be described below will be described as an optical sheet according to one aspect of the present invention, but the optical sheet may be other optical sheets such as the light guide sheet 120 and the prism sheets 140 and 150. That is, any one or two or more of the light guide sheet 120 and the prism sheets 140 and 150 may have a base layer 131 to be described below.

### (Light Source)

The light source 110 is not particularly limited, and may be, for example, one in which a plurality of light-emitting diodes are arranged in a line. The light source 110 is disposed so that the emitted light is incident on an end surface of the light guide sheet 120. Here, in FIG. 1, the light source 110 is disposed so that it comes into contact with the light guide sheet 120, but the light source 110 may be disposed away from the light guide sheet 120.

### (Light Guide Sheet)

The light guide sheet 120 has a substantially rectangular light exit surface as the upper surface, guides light that has entered the inside from an end surface (light incidence end surface) toward the end surface on the side opposite to the light incidence end surface, and emits the light from the light exit surface to the light diffusion sheet 130. In the light guide sheet 120, a light reflecting member may be provided on the end surface on the side opposite to the light incidence end surface and on the lower surface of the light guide sheet 120. In addition, the light guide sheet 120 may have an uneven shape such as a prism on the light exit surface. Here, in FIG. 1, the light guide sheet 120 has a substantially rectangular cross section in the thickness direction along the light guide direction, but the cross section may have a wedge shape or the like. Specifically, the lower surface may be asymptotically close to the light exit surface from the light incidence end surface toward the opposite end surface.

### (Light Diffusion Sheet)

The light diffusion sheet 130 diffuses light emitted from the light guide sheet 120 and emits light toward the prism sheets 140 and 150. The light diffusion sheet 130 in the present embodiment includes a base layer 131, a light diffusion layer 132 laminated on the light exit surface of the base layer 131, and an anti-sticking layer 133 laminated on the light incidence surface of the base layer 131. The base layer 131 may have a skin layer (not shown) on the light exit surface and the light incidence surface (the light exit surface and the light incidence surface may be collectively referred to hereinafter as "surface"). That is, the light diffusion layer 132 and the anti-sticking layer 133 may be laminated on the skin layer.

The light diffusion layer 132 and the anti-sticking layer 133 are not particularly limited, and may have a known configuration. For example, the light diffusion layer 132 includes first beads 134 having a high refractive index and a resin binder 135 for fixing the first beads 134 in a dispersed state, and improves light diffusion properties of the light diffusion sheet 130. The anti-sticking layer 133 contains second beads 136 having a smaller diameter than the first beads 134 of the light diffusion layer 132 and the resin binder 135 that separates and disperses the second beads 136, and curbs the light incidence surface of the light diffusion sheet 130 and the light exit surfaces of the light guide sheet 120 adhering to each other.

### <<Base Layer>>

The base layer 131 is a transparent layer that can transmit light and is a resin layer containing polyester as a main component. The content of the polyester in the base layer 131 is preferably 50 mass% or more and more preferably 80 mass%, and may be 100 mass%. The polyester is not particularly limited, and polyethylene terephthalate (PET) is preferable in order to easily form a first convex part 131b and a second convex part 131c to be described below. The raw material for polyester may be a new raw material (virgin raw material), and a recycled raw material is preferable in consideration of environmental protection. A recycled optical film is particularly preferable. In addition, a mixed raw material in which a virgin raw material and a recycled raw material are mixed may be used. The mixing ratio of the virgin raw material and the recycled raw material in the mixed raw material is not particularly limited, and it is preferable that the recycled raw material be contained in a larger amount than the virgin raw material. The virgin raw material may be derived from a fossil fuel or may be derived from a plant.

When the base layer of the optical sheet is prepared using recycled PET raw materials, the PET base layer is subjected to steps involving heating such as washing, extrusion, and polymerization. Thus, thermally crystalline parts with high crystallinity tend to be formed inside the PET base layer. When some thermal crystals are present on the surface of the base sheet, a relatively gentle convex part is formed on the surface of the base sheet. As a result, in the optical sheet manufacturing step, when the base layers of two or more optical sheets are stacked and handled, since the above relatively gentle convex part is present on the surface of the base layer, it is possible to reduce surface friction resistance, it is possible to reduce the occurrence of sticking in which the base layers adhere to each other, and excellent handling properties are obtained.

The ratio SRz/SRa of the ten-point average roughness SRz to the average roughness SRa on a surface 131a of the base layer 131 is 17 or more and 45 or less. The average roughness SRa is preferably 2.5 nm or more and 15 nm or less, and the ten-point average roughness SRz is preferably 107 nm or more and 410 nm or less. When the average roughness SRa and the ten-point average roughness SRz are within the above ranges, it is possible to further improve handling properties of the base layer 131, and thus it is possible to further improve handling properties of the light diffusion sheet 130.

Specifically, when an uneven shape in which the average roughness SRa and the ten-point average roughness SRz are controlled such that they are within the above ranges is formed on the surface 131a, it is possible to reduce surface friction resistance. In the optical sheet manufacturing process, the base layer with the surface that is in contact with the transport roller is transported. In this case, in a base layer with a smooth surface, the surface friction resistance during transport increases. On the other hand, if the surface has too many steep unevennesses, the convex parts may be scraped off when the surface comes into contact with the transport roller, and dust may be generated and contaminate the transport roller. On the other hand, since the base layer 131 in the light diffusion sheet 130 has an appropriately controlled uneven shape on the surface 131a, it is possible to minimize surface friction resistance and reduce contamination of the transport roller during transport. In addition, the base layer is rolled during manufacturing, and thus the surfaces may come into contact with each other. In a base layer with a smooth surface, the surfaces may stick to each other, but the optical sheet (the base layer 131) has the appropriately controlled uneven shape on the surface 131a, and thus the occurrence of such sticking can be reduced. When the surface abrasion resistance and the sticking is reduced, the yield of the base layer 131 can be improved, the light diffusion sheet 130 (the optical sheet) and the backlight unit 100 can be easily manufactured, and manufacturing cost can be reduced. In addition, when the uneven shape is appropriately controlled, even if some scratches occur on the surface 131a of the base layer 131, it is possible to reduce deterioration of the optical function due to the scratches. In this manner, the base layer 131 having the appropriately controlled uneven shape on the surface 131a can improve handling properties.

When the light diffusion sheet 130 includes the base layer 131, it is possible to improve light diffusion properties. That is, when the base layer 131 is used in a light diffusion sheet, it is possible to improve light diffusion properties of the light diffusion sheet 130 due to the uneven shape of the surface 131a.

It is preferable that both the light incidence surface and the light exit surface of the base layer 131 satisfy the ratio SRz/SRa, and it is more preferable that the base layer 131 additionally satisfy the average roughness SRa and the ten-point average roughness SRz. In the base layer 131, a desired uneven shape can be formed on the surface 131a due to a component to be described below. Therefore, it is easy to form an uneven shape on both the light incidence surface and the light exit surface in which the ratio SRz/SRa, the average roughness SRa and the ten-point average roughness SRz are controlled such that they are within desired ranges.

In order to further improve handling properties of the base layer 131, the lower limit of the ratio SRz/SRa of the ten-point average roughness SRz to the average roughness SRa is more preferably 25, and still more preferably 27. On the other hand, in order to reduce the risk of scratches occurring on other members and the like due to excessively steep convex parts formed on the surface 131a, the upper limit of the ratio SRz/SRa is more preferably 38 and still more preferably 37.

If SRz/SRa is set as above, in the optical sheet manufacturing step, when the base layers of two or more optical sheets are stacked and handled, since unevennesses such as relatively gentle convex parts are formed on the surfaces of the base layers, it is possible to reduce surface friction resistance, it is possible to reduce the occurrence of sticking in which the base layers adhere to each other, and excellent handling properties are obtained.

The base layer 131 may contain a plurality of particles. The particle may be either inorganic particles or organic particles. Examples of particles include alumina, silica, and calcium carbonate. The lower limit of the content concentration of the particles in polyester is preferably 10 ppm, more preferably 30 ppm, and still more preferably 50 ppm. The upper limit of the content concentration is preferably 10,000 ppm, more preferably 9,000 ppm, and still more preferably 8,000 ppm.

In addition, the lower limit of the average particle size of the particles is preferably 0.005 µm, more preferably 0.010 µm, and still more preferably 0.015 µm. The upper limit of the average particle size is preferably 50 µm, more preferably 40 µm, and still more preferably 30 µm.

As shown in FIG. 2, the base layer 131 has the surface 131a having the plurality of first convex parts 131b formed by highly crystalline parts. In addition, the base layer 131 may additionally have the plurality of second convex parts 131c caused by the plurality of particles on the surface 131a. That is, on the surface 131a, uneven shapes may be formed due to different factors.

The plurality of first convex parts 131b formed by the highly crystalline parts are relatively gentle convex parts, and the value obtained by multiplying an aspect ratio by 1,000 is preferably less than 15. The upper limit of the value is more preferably 10, still more preferably 8, and particularly preferably 7. The lower limit of the value is not particularly limited, and may be, for example, 1, 1.5, or 2. Here, the aspect ratio is a value obtained by dividing the height of the convex part by the length of the bottom of the convex part.

The presence of the first convex part 131b of the optical sheet is determined as follows. First, in order to observe the surface 131a of the base layer 131, other layers laminated on the surface 131a of the base layer 131 of the optical sheet are peeled off by a method to be described below. Here, when the surface 131a is exposed, it is not necessary to peel off the other layers. In order to image unevennesses on the surface 131a of the base layer 131, a contact type surface roughness measuring instrument is used. In the center of the base layer 131, 81 measurements are performed in an optical sheet forming direction, with a measurement length of 0.5 mm, a measurement interval (pitch) of 5 µm, and a stylus pressure of 100 µN. That is, a rectangle with a long side of 0.5 mm and a short side of 0.4 mm is defined as one observation region, and it is detected whether there are first convex parts 131b having a predetermined aspect ratio. Since the first convex parts 131b are not necessarily uniformly present on the base layer 131, the presence of the first convex part 131b is determined by observing a total of 10 observation regions.

In order to improve handling properties of the base layer 131, the lower limit of the proportion of the first convex parts 131b having an aspect ratio within the above range among the first convex parts 131b formed on the surface 131a is preferably 40%, more preferably 50%, and still more preferably 70%. On the other hand, the upper limit of the proportion may be 100%.

The proportion of the first convex parts 131b of the optical sheet is calculated as follows. First, in order to observe the surface 131a of the base layer 131, other layers laminated on the surface 131a of the base layer 131 of the optical sheet are peeled off by a method to be described below. Here, when the surface 131a is exposed, it is not necessary to peel off the other layers. As described above, in order to image unevennesses on the surface 131a of the base layer 131, a contact type surface roughness measuring instrument is used. In the center of the base layer 131, 81 measurements are performed in a film forming direction of the optical sheet, with a measurement length of 0.5 mm, a measurement interval (pitch) of 5 µm, and a stylus pressure of 100 µN. A rectangle with a long side of 0.5 mm and a short side of 0.4 mm is defined as one observation region, and a total of 10 observation regions are observed. Among these 10 observation regions, the number of observation regions in which there are one or more first convex parts 131b having a predetermined aspect ratio is defined as the proportion of the first convex parts 131b.

Here, in order to further improve handling properties of the base layer 131, the lower limit of the width of the bottom of the first convex part 131b is preferably 15 µm and more preferably 20 µm. In addition, the upper limit of the width of the bottom of the first convex part 131b is not particularly limited, and may be, for example, 40 µm or 30 µm.

Here, in order to further improve handling properties of the base layer 131, the upper limit of the height of the first convex part 131b is preferably 0.20 µm and more preferably 0.15 µm. In addition, the lower limit of the height of the first convex part 131b is not particularly limited, and may be, for example, 0.05 µm or 0.07 µm.

Here, in order to further improve handling properties of the base layer 131, the lower limit of the half-value width of the first convex part 131b is preferably 10 µm and more preferably 12 µm. In addition, the upper limit of the half-value width of the first convex part 131b is not particularly limited, and may be, for example, 20 µm or 15 µm.

The plurality of second convex parts 131c caused by the plurality of particles are steep convex parts, and the value obtained by multiplying an aspect ratio by 1,000 is preferably 15 or more. The upper limit of the value is not particularly limited, and may be, for example, 70, 60, or 50.

In order to improve handling properties of the base layer 131, the lower limit of the proportion of the second convex parts 131c having an aspect ratio within the above range among the second convex parts 131c formed on the surface 131a is preferably 40%, more preferably 50%, and still more preferably 70%. On the other hand, the upper limit of the proportion may be 100%. The method for calculating the proportion of the second convex parts 131c is the same as the method for calculating the proportion of the first convex parts 131b.

When such a plurality of first convex parts 131b and a plurality of second convex parts 131c are provided, it is possible to easily set the average roughness SRa, the ten-point average roughness SRz and the ratio SRz/SRa within the above ranges.

In the light diffusion sheet 130, the shape of the surface 131a can be changed by the particles that can be contained in the base layer 131. It is also preferable that the average roughnesses SRa and SRz on the surface 131a of the base layer 131 satisfy either the following condition (a) or (b). Here, the condition (a) is easily satisfied when the base layer 131 does not contain the particles, and the condition (b) is easily satisfied when the base layer 131 contains the particles.
(a) 2.5 nm≤average roughness SRa<8 nm, and 107 nm≤ten-point average roughness SRz<200 nm
(b) 8 nm≤average roughness SRa≤15 nm, and 200 nm≤ten-point average roughness SRz≤410 nm

In the condition (a), the lower limit of the average roughness SRa may be 3 nm or 3.5 nm. In the condition (a), the upper limit of the average roughness SRa may be 7 nm or 6 nm. In the condition (a), the lower limit of the ten-point average roughness SRz may be 110 nm or 115 nm. In the condition (a), the upper limit of the ten-point average roughness SRz may be 170 nm or 150 nm.

In the condition (b), the lower limit of the average roughness SRa may be 9 nm or 10 nm. In the condition (b), the upper limit of the average roughness SRa may be 14 nm or 13 nm. In the condition (b), the lower limit of the ten-point average roughness SRz may be 250 nm or 300 nm. In the condition (b), the upper limit of the ten-point average roughness SRz may be 405 nm or 403 nm.

The average thickness of the base layer 131 is not particularly limited, and is preferably 10 µm or more and 400 µm or less and more preferably 20 µm or more and 130 µm or less. When the average thickness is within the above range, the base layer can have strength that allows the occurrence of bending to be reduced and the light diffusion sheet 130 can be made thin. Here, the term "average thickness" refers to an average value of the thicknesses at any 10 points.

The base layer 131 preferably has a transmission color tone with an a value of -1.0 or more and a b value of 5.0 or less. When the a value and the b value of the transmission color tone satisfy the above numerical values, it is possible to reduce the color difference of the base layer 131 and improve the transparency. The upper limit of the a value and the lower limit of the b value of the transmission color tone are not particularly limited, and it is preferable that the upper limit of the a value be 1.0, and the lower limit of the b value be -1.0.

As described above, the base layer 131 may have a skin layer interposed between the light diffusion layer 132 and the anti-sticking layer 133. The skin layer may include, for example, a binder and particles dispersed in the binder.

As the binder contained in the skin layer, either an organic binder or an inorganic binder may be used, but it is preferable to use an organic binder because it is easy to process into a roll when the light diffusion sheet 130 is manufactured. The organic binder is an organic compound having a covalent bond and a molecule composed of two or more types of atoms as a minimum unit, and is preferably a phenol resin, a silicone resin, a nylon resin, polyethylene, polyester, polyolefin, a vinyl resin, an acrylic resin, a cellulose resin, or the like, and may contain two or more thereof. It is more preferable that the organic binder contain a polyester or acrylic resin from which an appropriate functional group can be selected in consideration of coatability on the base layer 131. In addition, it is still more preferable that the organic binder have a cross-linked structure in order to improve heat resistance, hydrolysis resistance, and abrasion resistance. Examples of organic binders having a cross-linked structure include polyurethane, polyurea, melamine resin, polyamide, and polysilane.

As the particles contained in the skin layer, either or both of organic particles and inorganic particles may be used. The inorganic particles are not particularly limited, and examples thereof include particles made of silica, colloidal silica, alumina, ceria, kaolin, talc, mica, calcium carbonate, barium sulfate, carbon black, zeolite, titanium oxide, and various metal oxides. The particle size of the particles depends on the dispersibility of the particles and the thickness of the binder, particles having a plurality of particle sizes may be used, and preferably, the lower limit value of the average particle size of at least one type of particles is 0.2 nm, and the upper limit value thereof is 2,000 nm. The upper limit value of the average particle size is more preferably 1,000 nm. Here, the particle size is an average particle size, which is an average value of effective sizes (diffraction scattering sizes) calculated by a laser diffraction scattering method.

The lower limit of the average thickness of the skin layer is preferably 0.001 µm and more preferably 0.010 µm. The upper limit of the average thickness is preferably 10 µm and more preferably 2 µm. When the thickness is set in this range, the base layer 131 can be made thin, and the first convex part 131b and the second convex part 131c can be effectively formed on the surface of the skin layer.

The lower limit of the amount of the particles added with respect to 100 parts by mass of the binder in the skin layer is preferably 0.01 parts by mass and more preferably 0.1 parts by mass. The upper limit of the amount added is preferably 100 parts by mass and more preferably 50 parts by mass. When the amount of the particles added is within the above range, it is possible to prevent the manufacturing cost of the base layer 131 from becoming unnecessarily high and to prevent the light transmittance of the base layer 131 from decreasing.

Even if the base layer 131 has the skin layer, the uneven shape appears on the surface of the skin layer. That is, the surface 131a of the base layer 131 having the skin layer has a ratio SRz/SRa of 17 or more and 45 or less.

Here, when the light diffusion layer 132, the anti-sticking layer 133, and the skin layer, or other layers are laminated on the surface of the base layer 131, these layers are peeled off, and the surface of the base layer 131 is then analyzed to observe the unevenness of the base layer 131 itself. As a method for peeling off the layers laminated on the base layer 131, for example, a method in which the optical sheet including the base layer 131 is immersed in a container containing methyl ethyl ketone (MEK), toluene, butyl acetate, acetone, methylparaben, ethylparaben, propylparaben, or the like or a mixture thereof, and appropriately heated under vibration by an ultrasonic washing machine can be used.

### (Prism Sheet)

The prism sheets 140 and 150 improve light output performance of the backlight unit 100 by reflecting light emitted from the light diffusion sheet 130. The backlight unit 100 according to the present embodiment includes two prism sheets 140 and 150. The first prism sheet 140 disposed on the side of the light diffusion sheet 130 reflects light incident from the light diffusion sheet 130 and emits the light to the second prism sheet 150. The second prism sheet 150 reflects light incident from the first prism sheet 140 so that the light travels approximately perpendicular to the light incidence surface of the display panel 200 and emits the light toward the display panel 200.

The prism sheets 140 and 150 include substantially plate-like (sheet-like) base parts **141** and 151 having a light incidence surface and a light exit surface, and a plurality of prism parts 142 and 152 disposed on the light exit surfaces of the base parts 141 and 151 and extending in one direction. The plurality of prism parts 142 and 152 are convex parts arranged in parallel rows on the light exit surfaces of the prism sheets 140 and 150. The cross-sectional shape of the prism parts 142 and 152 in the thickness direction of the prism sheets 140 and 150 is not particularly limited, and may be a semicircular shape, a semi-elliptical shape, a triangular shape or the like. The first prism sheet 140 and the second prism sheet 150 are preferably disposed so that the ridgelines of the prism parts 142 and 152 are perpendicular to each other in a plan view.

The height from the light incidence surface of the prism sheets 140 and 150 to the vertex of the prism parts 142 and 152 (the thickness of the prism sheet) is not particularly limited, and is preferably 50 µm or more and 200 µm or less and more preferably 100 µm or more and 180 µm or less. The interval (pitch) between the prism parts 142 and 152 is preferably 30 µm or more and 100 µm or less and more preferably 40 µm or more and 60 µm or less.

### <Method for Manufacturing Optical Sheet>

As described above, the optical sheet is preferably formed of a recycled polyester raw material or a mixed raw material containing a recycled polyester raw material. When recycled raw materials that have been subjected to thermal history in the process of forming a virgin raw material polyester into a molded product are used, the crystallinity tends to be non-uniform and the first convex part 131b tends to be formed. A method for manufacturing the optical sheet using recycled raw materials will be described below. The method for manufacturing an optical sheet mainly includes a step of recovering the molded product containing polyester as a main component, a step of crushing the molded product recovered in the recovering step, a step of forming pellets by extrusion molding using crushed pieces obtained in the crushing step, and a step of forming a base layer using the pellets. In addition, the method for manufacturing an optical sheet includes a step of washing the crushed pieces obtained in the crushing step.

### [Recovering Step]

In the recovering step, the molded product containing polyester as a main component is recovered. The molded product containing polyester as a main component is not particularly limited as long as it is a transparent molded product, and examples thereof include other used optical sheets and PET bottles.

### [Crushing Step]

In the crushing step, the molded product recovered in the recovering step is crushed. The crushing method is not particularly limited, and a known crusher device that can break the molded product into crushed pieces can be used.

### [Washing Step]

In the washing step, the crushed pieces obtained in the crushing step are washed. The washing method is not particularly limited, and a known washing machine that can wash the crushed pieces using a washing agent or the like can be used.

The washing may be performed on the molded product recovered in the recovering step. That is, the molded product recovered in the recovering step may be washed, and the washed molded product may be crushed.

### [Step of Forming Pellets]

In the step of forming pellets, pellets are formed by extrusion molding using the crushed pieces obtained in the crushing step. Specifically, the crushed pieces are heated and melted, and the molten material is molded into pellets by an extrusion machine. In the step of forming pellets, an additive for adjusting optical properties of the obtained optical sheet may be added. In order to easily and reliably form the above first convex part on the obtained base layer, the lower limit of the extrusion temperature in the step of forming pellets is preferably 250°C and more preferably 265°C. On the other hand, the upper limit of the extrusion temperature is not particularly limited and is preferably, for example, 310°C, in order to prevent the generation of a decomposition gas.

### [Step of Forming Base Layer]

In the step of forming a base layer, a base layer using the pellets is formed. For example, in the step of forming a base layer, a base layer is formed by extrusion molding using the pellets. In the step of forming a base layer, a virgin raw material may be added in order to adjust optical properties of the obtained base layer. The extrusion temperature in the extrusion molding is equal to or higher than the melting temperature of the polyester. In order to improve the ease and reliability of first convex part formation, the lower limit of the extrusion temperature is preferably 250°C and more preferably 265°C. On the other hand, the upper limit of the extrusion temperature is not particularly limited, and is preferably, for example, 310°C, in order to prevent the generation of a decomposition gas.

### <Advantage>

In the optical sheet, since an uneven shape in which the ratio SRz/SRa of the ten-point average roughness SRz to the average roughness SRa is 17 or more and 45 or less is formed on at least one surface 131a of the base layer 131, it is possible to make adhesion to other layers laminated on the surface easier and it is possible to reduce sticking and surface abrasion due to contact with other members. Therefore, the optical sheet can have improved handling properties. In addition, the optical sheet has the uneven shape, and thus can have improved light diffusion properties.

In the method for manufacturing an optical sheet, since the optical sheet is manufactured from raw materials obtained by recovering the molded product containing polyester as a main component, it is possible to manufacture the optical sheet from recycled resources.

### Other Embodiments

The embodiments disclosed herein are only examples in all respects and should not be considered as restrictive. The scope of the present invention is not limited to the configurations of the embodiments, but is defined by the claims, and is intended to encompass equivalents of the scope of the claims and all modifications falling within the scope of the claims.

Even if the optical sheet is the above light diffusion sheet, the specific configuration of the light diffusion sheet is not particularly limited. For example, the light diffusion sheet does not need to include the above anti-sticking layer.

The specific configuration of the backlight unit is not limited to the configuration described in the embodiment. For example, the backlight unit may be of a direct type.

In addition, the backlight unit may be provided in a lighting device.

The light source of the backlight unit does not necessarily have to be an LED light source. In addition, the number of light sources may be one instead of plural. The light source may be a line light source instead of the point light source.

The backlight unit may include an optical sheet other than a light guide sheet, a light diffusion sheet and a prism sheet, or may not include any of a light guide sheet, a light diffusion sheet and a prism sheet. The backlight unit may include one, or three or more prism sheets or may include a plurality of light diffusion sheets.

The optical sheet having a base layer may be used not only as a light diffusion sheet but also as a light guide sheet, a prism sheet, a polarizing sheet, a reflective sheet, a viewing angle limiting sheet or the like. Accordingly, excellent handling properties can be expected when the above optical sheets of the same type are stacked and handled or when a backlight unit is prepared using optical sheets of different types.

In the optical sheet, as long as the ratio SRz/SRa of the ten-point average roughness SRz to the average roughness SRa on at least one surface of the base layer is within the above range, the uneven shape on the surface does not have to be formed by highly crystalline parts and particles.

The prism part of the prism sheet may be formed on the light incidence surface of the base part.

The recycled polyester raw material in the method for manufacturing an optical sheet is not limited to one obtained by physical recycling but may be one obtained by chemical recycling. Examples

Examples of the present invention will be described below, but the present invention is not limited to the following examples.

A plurality of types of optical sheets (with a thickness of 50 µm) manufactured using PET as a raw material under different conditions were prepared. The average roughness SRa and the ten-point average roughness SRz on the surfaces of the optical sheets were measured, and the ratio SRz/SRa thereof was calculated. Table 1 shows optical sheet manufacturing conditions, measured values and calculation results.

**[Table 1]**

| Example | PET raw material | Presence of particles in PET substrate | Surface roughness (PET substrate surface) | | | Yield |
|---|---|---|---|---|---|---|
| | | | SRa(nm) | SRz(nm) | SRz/SRa | |
| Optical sheet 1 | recycled | yes | 11.0 | 403 | 37 | ⊚ |
| Optical sheet 2 | recycled | yes | 12.0 | 329 | 27 | ⊚ |
| Optical sheet 3 | recycled | no | 4.0 | 116 | 29 | ⊚ |
| Optical sheet 4 | virgin | yes | 6.0 | 106 | 18 | ○ |
| Optical sheet 5 | virgin | yes | 2.8 | 111 | 40 | ○ |
| Optical sheet 6 | recycled | no | 3.0 | 100 | 33 | ⊚ |

Here, the yield in Table 1 was evaluated as ⊚ when the defect rate due to scratch defects in the test step was less than 2%, ○ when the defect rate was 2% or more and less than 5%, and △ when the defect rate was 5% or more and less than 10%.

As shown in Table 1, it can be understood that all the optical sheets 1 to 6 had an SRz/SRa of 17 or more and 45 or less, and had a defect rate of less than 5% due to scratch defects in the test step, indicating a high yield. In addition, it can be understood that all the optical sheets 1, 2, 3, and 6 had an SRz/SRa of 25 or more and 37 or less, and had a defect rate of less than 2% due to scratch defects in the test step, indicating a higher yield. In some of the optical sheets 1 to 6, particles were added to the PET substrate, and when the particles were contained, the SRa value tended to be relatively higher than when the particles were not contained. Therefore, the SRa alone was not considered as an appropriate index for selecting an optical sheet having excellent handling properties. On the other hand, for example, the optical sheets 1, 2, 3, and 6 had an SRz/SRa of 25 or more and 37 or less and had a higher yield, and thus the SRz/SRa was an appropriate index for selecting an optical sheet having excellent handling properties even when particle were added to the PET substrate.

In addition, as shown in Table 1, the optical sheets 1, 2, 3, and 6 manufactured from recycled PET raw materials had an SRz/SRa of 25 or more and 37 or less and had a higher yield. This is thought to be because, in the optical sheets manufactured from recycled PET raw materials, since unevennesses such as relatively gentle convex parts were formed on the surfaces of the base layers, when the base layers of two or more optical sheets were stacked and handled in the manufacturing step, the surface friction resistance was reduced, and thus the occurrence of sticking in which the base layers adhered to each other could be reduced.

Next, on the surface of the optical sheet 2, three first convex parts each having a value obtained by multiplying an aspect ratio by 1,000 that was less than 15 and three second convex parts each having a value obtained by multiplying an aspect ratio by 1,000 that was 15 or more were selected, and the value obtained by multiplying an aspect ratio by 1,000 was calculated from the height and the width of the bottoms thereof. In addition, the half-value width thereof was measured, and the flat ratio (half-value width/width of bottom) was calculated. The results are shown in Table 2. Here, the half-value width is the width in a direction perpendicular to the thickness direction of the optical sheet at a position at half of the height of the first convex part and the second convex part.

**[Table 2]**

| | Width of bottom (µm) | Height (µm) | Half-value width (µm) | Aspect ratio × 1000 | Half-value width / width of bottom |
|---|---|---|---|---|---|
| First convex part 1 | 23.0 | 0.10 | 13.5 | 4.3 | 0.6 |
| First convex part 2 | 32.4 | 0.08 | 13.5 | 2.5 | 0.4 |
| First convex part 3 | 21.6 | 0.13 | 14.9 | 6.0 | 0.7 |
| Second convex part 1 | 9.5 | 0.44 | 4.1 | 46.3 | 0.4 |
| Second convex part 2 | 13.5 | 0.26 | 5.4 | 19.3 | 0.4 |
| Second convex part 3 | 8.1 | 0.21 | 5.4 | 25.9 | 0.7 |

It can be understood from Table 2 that the value obtained by multiplying an aspect ratio by 1,000 was less than 15 for the first convex part caused by high crystallinity of the PET raw material and was 15 or more for the second convex part caused by particles. In addition, the flat ratios of the first convex part and the second convex part were both around 0.5, and were specifically 0.4 or more and 0.7 or less.

In addition, the transmission color tones of the optical sheets 1 to 6 shown in Table 1 were measured, and the a value and b value thereof were calculated. The results are shown in Table 3.

**[Table 3]**

| Example | PET raw material | Presence of particles in PET substrate | Transmission color tone (PET substrate) | | Yield |
|---|---|---|---|---|---|
| | | | a value | b value | |
| Optical sheet 1 | recycled | yes | -0.19 | 1.36 | ⊚ |
| Optical sheet 2 | recycled | yes | -0.11 | 0.45 | ⊚ |
| Optical sheet 3 | recycled | no | -0.1 | 0.12 | ⊚ |
| Optical sheet 4 | virgin | yes | -0.07 | 0.42 | ○ |
| Optical sheet 5 | virgin | yes | -0.13 | 0.76 | ○ |
| Optical sheet 6 | recycled | no | -0.05 | 0.25 | ⊚ |

In the results shown in Table 3, in all of these optical sheets, the a value of the transmission color tone was -1.0 or more, and the b value of the transmission color tone was 5.0 or less. When the a value and the b value of the transmission color tone satisfied the above numerical values, it was possible to reduce the color difference of the base layer and improve the transparency. As described above, the upper limit of the a value and the lower limit of the b value of the transmission color tone are not particularly limited, and it is preferable that the upper limit of the a value be 1.0, and the lower limit of the b value be -1.0.

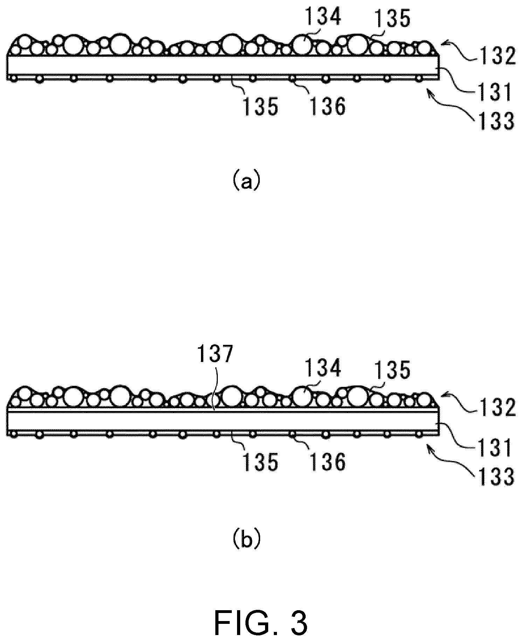

FIG. 3 shows schematic side views of the structure of the light diffusion sheet 130 including a layered conductive part, (a) of FIG. 3 is a view showing the configuration of the light diffusion sheet 130 containing an antistatic agent in the light diffusion layer 132, and (b) of FIG. 3 is a view showing the configuration of the light diffusion sheet containing an antistatic agent in an adhesive layer 137. That is, in the aspect shown in (a) of FIG. 3, the light diffusion layer 132 functions as the layered conductive part, and in the aspect shown in (b) of FIG. 3, the adhesive layer 137 functions as the layered conductive part. Here, the aspects shown in FIG. 3 are only examples, and the layered conductive part may be provided on any of the front surface, the back surface, and the inside of the optical sheet.

As described above, when the sheet surface of the optical sheet includes a conductive part, it is possible to effectively curb the optical sheet being charged and also to effectively prevent contamination inside the backlight. Such a conductive part may be a layered conductive part formed in parallel on the surface of the sheet, and the thickness thereof may be 0.001 µm or more and 1 µm or less.

Examples 7 to 13 were light diffusion sheets including the optical sheets 1 to 6 shown in Table 1 with or without a layered conductive part.

As shown in FIG. 3, Examples 7 and 12 were the light diffusion sheets 130 in which the light diffusion layer 132 containing no antistatic agent was provided on the surfaces of the optical sheets 1 and 5 (both having a thickness of 50 µm). The light diffusion layer 132 was formed by wet coating an acrylic resin to which styrene beads with a particle size of 1 to 15 µm were added.

As shown in FIG. 3, Examples 8, 9, 10, and 11 were the light diffusion sheets 130 in which the light diffusion layer 132 containing an antistatic agent was provided on the surfaces of the optical sheets 2, 3, 4, and 4 (all having a thickness of 50 µm). The light diffusion layer 132 was formed by wet coating an acrylic resin to which an ion conductive type antistatic agent and styrene beads with a particle size of 1 to 15 µm were added. The amount of the antistatic agent added was 1.5 parts by mass with respect to 100 parts by mass of the resin forming the light diffusion layer 132.

As shown in FIG. 4, in Example 13, the adhesive layer 137 containing an antistatic agent was provided between the optical sheet 6 (with a thickness of 50 µm) and the light diffusion layer 132. That is, the light diffusion sheet 130 of Example 13 had a three-layer structure including the base layer 131, the adhesive layer 137 and the light diffusion layer 132. The adhesive layer 137 contained an ion conductive type antistatic agent, and a primer for adhering the base layer 131 and the light diffusion layer 132. In addition, the light diffusion layer 132 was formed by wet coating an acrylic resin to which styrene beads with a particle size of 1 to 15 µm were added.

The surface electrical resistance value [Ω/sq] of the surface of the light diffusion sheets 130 on which the light diffusion layer 132 was formed in Examples 7 to 13 was measured. The results are shown in Table 4.

**[Table 4]**

| Example | Configuration of light diffusion sheet | | | Surface electrical resistance value [Ω/sq] of light diffusion sheet | Layer of conductive part |
|---|---|---|---|---|---|
| | Optical sheet | Light diffusion layer | Presence of antistatic agent in light diffusion layer | | |
| 7 | 1 | yes | no | >9.90E+15 | no |
| 8 | 2 | yes | yes | 5.70E+11 | Light diffusion layer |
| 9 | 3 | yes | yes | 5.60E+11 | Light diffusion layer |
| 10 | 4 | yes | yes | 3.50E+11 | Light diffusion layer |
| 11 | 4 | yes | yes | 6.70E+11 | Light diffusion layer |
| 12 | 5 | yes | no | >9.90E+15 | no |
| 13 | 6 | yes | no | 7.80E+11 | adhesive layer |

In the results shown in Table 4, in of both the light diffusion sheets without a layered conductive part (Examples 7 and 12), the surface electrical resistance value exceeded 9.90×10¹⁵ Ω/sq, which is the upper limit value of the measurement limit, and exhibited an immeasurably high surface electrical resistance value. Accordingly, it could be evaluated that the surface electrical resistance value of the light diffusion sheet without a layered conductive part was a high value substantially exceeding 10×10¹⁵ Ω/sq. On the other hand, it can be understood that all the light diffusion sheets with a layered conductive part (Examples 8 to 11, and 13) had a low surface electrical resistance value of the order of 10¹¹ Ω/sq, and were highly conductive, that is, had an antistatic effect.

That is, the surface electrical resistivity measured on at least one of a front surface and a back surface is preferably 1×10² Ω/sq or more and 10×10¹⁵ Ω/sq or less. Accordingly, it is possible to effectively curb the optical sheet being charged and also to effectively prevent contamination inside the backlight.

In addition, the surface electrical resistivity measured on at least one of a front surface and a back surface is more preferably 1×10² Ω/sq or more and 10×10¹³ Ω/sq or less. Accordingly, it is more effectively curb the optical sheet being electrically charged and also to more effectively prevent contamination inside the backlight.

### Industrial Applicability

As described above, the optical sheet of the present invention can have improved handling properties, and thus can be suitably used for a backlight unit for an image display device and the like.

### Reference Signs List

- 1: Image display device
- 100: Backlight unit
- 110: Light source
- 120: Light guide sheet
- 130: Light diffusion sheet
- 131: Base layer
- 131a: Surface
- 131b: First convex part
- 131c: Second convex part
- 132: Light diffusion layer
- 133: Anti-sticking layer
- 134: First bead
- 135: Resin binder
- 136: Second bead
- 137: Adhesive layer
- 140: First prism sheet
- 141, 151: Base part
- 142, 152: Prism part
- 150: Second prism sheet
- 200: Display panel

## Claims

1. An optical sheet comprising:
a base layer containing a polyester as a main component,
wherein the base layer has a first convex part on at least one surface, and a value obtained by multiplying an aspect ratio of the first convex part by 1,000 is less than 15.

2. The optical sheet according to claim 1, wherein
a ratio SRz/SRa of a ten-point average roughness SRz to an average roughness SRa on the one surface is 17 or more and 45 or less.

3. The optical sheet according to claim 1, wherein
the first convex part is formed by a highly crystalline part of the polyester.

4. The optical sheet according to claim 1, wherein
the base layer contains a plurality of particles, and has a plurality of second convex parts caused by the plurality of particles on the one surface.

5. The optical sheet according to claim 4, wherein
a value obtained by multiplying an aspect ratio of the second convex part by 1,000 is 15 or more.

6. The optical sheet according to claim 1, wherein
the average roughness SRa is 2.5 nm or more and 15 nm or less, and
the ten-point average roughness SRz is 107 nm or more and 410 nm or less.

7. The optical sheet according to claim 1, wherein
a transmission color tone has an a value of -1.0 or more and a b value of 5.0 or less.

8. The optical sheet according to claim 1, wherein
the optical sheet includes a layered conductive part having a thickness of 0.001 µm or more and 1 µm or less formed parallel to the surface of the sheet.

9. The optical sheet according to claim 1, wherein
a surface electrical resistivity measured on at least one of a front surface and a back surface is 1×10² Ω/sq or more and 10×10¹⁵ Ω/sq or less.

10. The optical sheet according to claim 9, wherein
the surface electrical resistivity measured on at least one of the front surface and the back surface is 1×10² Ω/sq or more and 10×10¹³ Ω/sq or less.

11. The optical sheet according to claim 1, wherein
the polyester is polyethylene terephthalate.

12. The optical sheet according to claim 1, further comprising:
a light diffusion layer laminated on the base layer.

13. A backlight unit, comprising:
the optical sheet according to any one of claims 1 to 12.

14. An image display device, comprising:
the backlight unit according to claim 13.

15. A lighting device, comprising:
the backlight unit according to claim 13.

16. A method for manufacturing an optical sheet, comprising:
a step of crushing a molded product containing a polyester as a main component;
a step of forming pellets by extrusion molding using crushed pieces obtained in the step of crushing; and
a step of forming a base layer using the pellets.

17. The method for manufacturing an optical sheet according to claim 16, further comprising:
a step of recovering the molded product.
